# EUROPEAN PATENT SPECIFICATION

(11) **EP 2 826 602 B1**
(45) Date of publication and mention of the grant of the patent: **22.07.2020**
(21) Application number: 13760466.6
(22) Date of filing: 20.02.2013
(51) Int. Cl.: B25F 5/00

(54) **ELECTRIC TOOL**
ELEKTROWERKZEUG
OUTIL ÉLECTRIQUE

(30) Priority: 13.03.2012 JP 2012055962
(43) Date of publication of application: 21.01.2015
(73) Proprietor: Panasonic Intellectual Property Management Co., Ltd., Osaka-shi, Osaka 540-6207 (JP)
(72) Inventor: MIYAZAKI, Hiroshi, Osaka 540-6207 (JP); IKEDA, Masaki, Osaka 540-6207 (JP)
(74) Representative: Appelt, Christian W.
(86) International application number: PCT/JP2013/000946
(87) International publication number: WO 2013/136672

(56) References cited:
- WO-A1-97/42701
- WO-A2-2009/102082
- JP-A- 2008 005 592
- JP-A- 2008 023 645
- JP-A- 2009 165 280
- JP-A- 2010 259 131
- JP-A- 2011 011 313
- US-A1- 2011 284 256

## Description

The present invention relates to an electric power tool that includes a brushless motor.

In recent years, known electric power tools employ a brushless motor as a driving source. JP 2011/11313 A describes an electric power tool that detects the position of a rotor of a brushless motor with a rotation position detection sensor and sets the timing for energizing an armature winding of the brushless motor based on a detected rotor position signal.

Additionally, the electric power tool of JP 2011/11313 A performs a protection operation that obviates failures in the motor caused by an abnormality in the rotor position signal of the rotation position detection sensor. More specifically, as shown in Fig. 6 of JP 2011/11313 A, a pattern of the rotor position signal that appears under a normal situation is continuous. However, the pattern that appears may be shifted under an abnormal situation. When an abnormality is detected in the rotor position signal, the motor is stopped to perform the protection operation on the motor.

In the electric power tool of JP 2011/11313 A, after the motor is stopped in response to the detection of an abnormal rotor position signal, for example, when a user activates an operation switch, the motor starts to operate again. This improves convenience.

In the electric power tool described above, the motor starts to operate again when the operation switch is switched on after an abnormality is detected. In this case, when the motor is abruptly operated at the output generated before the motor was stopped, the motor and an output unit (chuck) may suddenly move due to a current overshoot.

US 2011/0284256 A1 relates to another power tool. The power tool has a motor, a power supply unit, a trigger unit, a control unit, and a motor load detection unit. The power supply unit supplies power to the motor. The trigger unit causes the power supply unit to start applying a voltage to the motor. The control unit controls the power supply unit to increase the voltage to the motor at a constant increasing rate. The motor load detection unit detects a motor load. The control unit changes the constant increasing rate in accordance with the motor load.

WO 2009/102082 A2 shows a current detection circuit that detects that a drive current of the stator coil is exceeding a threshold value Ir. A rotation number detection circuit detects that the number of rotations of a rotor is lower than a threshold value Nr. A computing part outputs a PWM signal which switches a semiconductor switching element of the inverter circuit part. The computing part changes the threshold values Ir and Nr in accordance with the PWM duty of the PWM signal determined in accordance with a pressed distance of a switch trigger and detects a locked state of the motor on the conditions that the motor current I is exceeding the set threshold value Ir and that the number of rotations N thereof is lower than the threshold value Nr.

It is an object of the present invention to provide an electric power tool that improves safety. It is a further object to prevent or reduce current overshoot and unexpected repercussions that may be caused by reactivation of the motor that is slowing down.

To solve the above problems, an electric power tool according the present invention includes a brushless motor capable of generating forward and reverse rotation, a sensor that detects a rotation position of the brushless motor and outputs a position signal, a drive circuit that includes a plurality of switching elements and supplies power to the brushless motor, an

operation condition selector that selects one of activation and deactivation of the brushless motor in accordance with an operation performed by a user, a rotation direction selector that selects a rotation direction of the brushless motor in accordance with an operation performed by the user, and a controller that controls the drive circuit in accordance with rotation position information of the brushless motor based on the position signal provided from the sensor. The controller estimates a present position signal from a present rotation direction of the brushless motor selected by the rotation direction selector and a position signal obtained prior to a change to a present position signal detected by the sensor. The controller compares the estimated present position signal with the present position signal detected by the sensor to determine whether or not present position information, which is based on the detected present position signal, is normal. When the controller determines that the present position information based on the detected present position signal is abnormal, the controller executes abnormal deactivation to stop the supply of power to the brushless motor from the drive circuit. After the abnormal deactivation is executed and during a period in which a rotation speed of the brushless motor is decreasing due to the abnormal deactivation, when activation of the brushless motor is selected with the operation condition selector, the controller reactivates the brushless motor by controlling the switching elements of the drive circuit with a duty ratio lower than that before execution of the abnormal deactivation.

Preferably, the controller limits a count of the reactivation to a predetermined count.

Preferably, the controller notifies the user that the reactivation has reached the predetermined count.

Preferably, the controller performs an advance angle control on the brushless motor prior to the reactivation and does not perform the advance angle control when starting the reactivation.

Accordingly, the present invention provides an electric power tool that improves safety.
Fig. 1 is a partially cross-sectional view of an electric power tool of one embodiment.
Fig. 2 is a block diagram of the electric power tool of Fig. 1.
Fig. 3 is a block diagram of a drive circuit of Fig. 2.
Figs. 4A and 4B each are diagrams showing control signal conditions for a switching element in a commutation control, and Fig. 4B is a diagram showing switching element conditions in the commutation control.
Figs. 5A to 5C are each a flowchart of a control executed on the electric power tool.
Fig. 6 is a flowchart of an abnormal deactivation process.
Fig. 7 is a diagram showing a control signal corresponding to normal deactivation and abnormal deactivation.

An electric power tool according to one embodiment of the present invention will now be described with reference to the drawings.

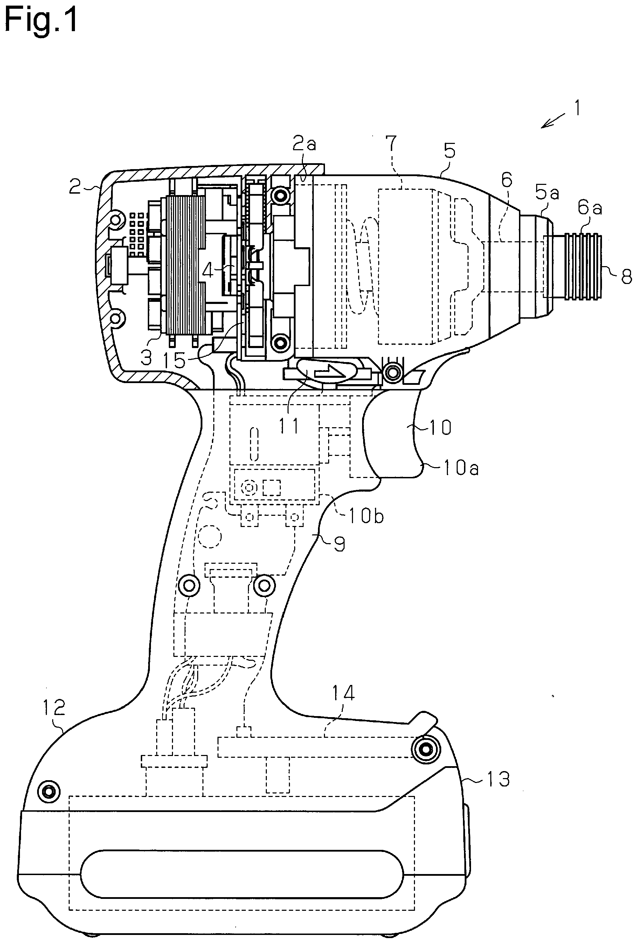

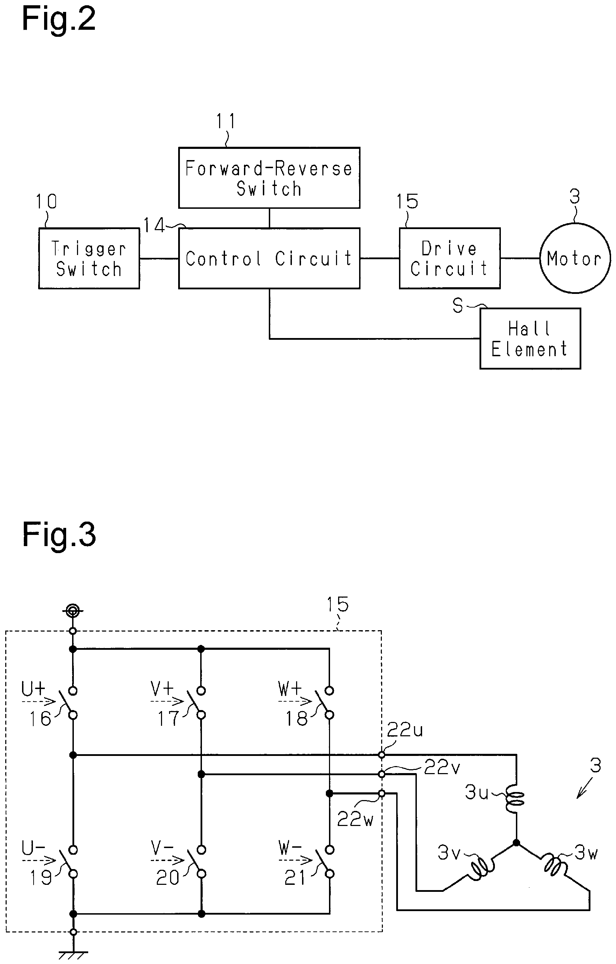

As shown in Fig. 2, an electric power tool 1 of the embodiment includes a motor 3, which serves as a driving source, a trigger switch 10, which serves as an operation condition selector that selects one of activation and deactivation of the motor 3 in accordance with an operation performed by a user, a rotation direction selector 11 (forward-reverse switch), which selects the rotation direction of the motor 3 in accordance with a user operation, a hall element S, which serves as a sensor detecting the rotation position of the motor 3 and outputting a position signal, a drive circuit 15, which supplies power to the motor 3, and a control circuit 14, which serves as a controller that controls the drive circuit 15.
In an example shown in Fig. 1, the motor 3 is accommodated in a cylindrical motor housing 2, which includes an open end 2a and a closed end. A rotation shaft 4 of the motor 3 extends in the axial direction of the motor housing 2 (left-right direction in Fig. 1). The open end 2a of the motor housing 2 is coupled to a dome 5, the diameter of which gradually decreases from a basal end to a distal end 5a. An output shaft 6 protrudes from the distal end 5a of the dome 5. The output shaft 6 is coupled to the rotation shaft 4 of the motor 3 by a torque amplifier 7, which is accommodated in the dome 5. A distal end 6a of the output shaft 6 includes a bit attachment portion 8 that allows for the attachment of a tool (bit), which is not shown in the drawing.

In the example shown in Fig. 1, the trigger switch 10 is arranged in a handle 9, which is formed in the proximity of the open end 2a of the motor housing 2. The trigger switch 10 includes a main body portion 10a, which is fixed in the handle 9, and an operation portion 10b, which includes a distal end protruding from a front end of the handle 9 and which is urged in the protrusion direction from the main body portion 10a. The trigger switch 10 provides the control circuit 14 with a speed signal corresponding to an amount operated by a user (pulled amount of the trigger switch 10) to adjust the rotation speed in the motor 3.

In the example shown in Fig. 1, the rotation direction selector 11 may be located on a surface of the handle 9 slightly over the trigger switch 10. The rotation direction selector 11 includes an operation knob, which is movably supported. The rotation direction of the motor 3 is switched in accordance with the movement direction of the operation knob.

In the example shown in Fig. 1, the electric power tool is of a battery-driven type. A battery seat 12 is formed in a bottom end of the handle 9, and a battery 13 serving as a power source is attached to the battery seat 12.

Based on operation conditions of the trigger switch 10 and the rotation direction selector 11, the control circuit 14 controls the driving of the motor 3, which serves as a driving source, through the drive circuit 15. The drive circuit 15 generates driving power and supplies the driving power to the motor 3 in accordance with the control of the control circuit 14. As shown in Fig. 1, the control circuit 14 is, for example, accommodated in the handle 9, and the drive circuit 15 is, for example, accommodated in the motor housing 2.

A brushless motor is employed as the motor 3. As shown in Fig. 2, the hall element S, which is electrically connected to the control circuit 14, detects the rotation position of a rotor of the brushless motor and provides the control circuit 14 with a position signal.

Fig. 3 is a schematic block diagram showing the electrical configuration of the electric power tool 1. The drive circuit 15 may include a pulse width modulation (PWM) inverter formed by connecting a plurality (for example, six) of switching elements 16 to 21.

In the illustrated example, the drive circuit 15 is formed by connecting in parallel a series circuit of the switching elements 16 and 19, a series circuit of the switching elements 17 and 20, and a series circuit of the switching elements 18 and 21. The switching elements 16, 17, and 18 located at an upper side are each connected to a positive terminal of the battery 13, and the switching elements 19, 20, and 21 located at a lower side are each connected to a negative terminal of the battery 13. A node between the switching elements 16 and 19, a node between the switching elements 17 and 20, and a node between the switching elements 18 and 21 are connected to motor coils 3u, 3v, and 3w of the motor 3 via connection points 22u, 22v, and 22w, respectively. The switching elements 16 to 21 each may be formed by a field effect transistor (FET).

The control circuit 14 controls the drive circuit 15 in accordance with rotation position information of the motor 3 based on a position signal received from the hall element S. More specifically, the control circuit 14 generates a motor control signal in accordance with the rotation position information of the motor 3 and provides each of the switching elements 16 to 21 with the control signal. Each of the switching elements 16 to 21 is driven based on a duty ratio (that is, ratio of on to off) of the motor control signal. The control circuit 14 changes the duty ratio for each of the switching elements 16 to 21 by appropriately changing the duty ratio of the motor control signal. The drive circuit 15 converts the DC voltage of the battery 13 into three-phase driving power and supplies the three-phase driving power to the motor 3. When the switching elements 16 to 21 are each an FET, the motor control signal may be referred to as a gate on/off signal provided to the gates of the switching elements 16 to 21.

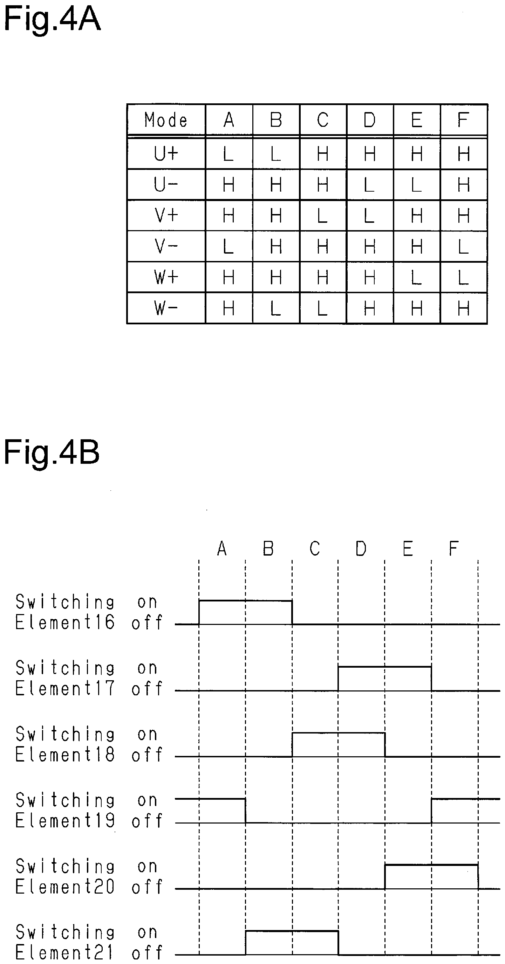

The control circuit 14 of the electric power tool 1 of the embodiment outputs the motor control signal, which is provided to each of the switching elements 16 to 21 when generating rotation with the motor 3, by sequentially switching modes A to F shown in Fig. 4A. As shown in Fig. 4B, each of the switching elements 16 to 21 is switched on and off. When activating the motor 3, the control circuit 14 performs a commutation control, which provides the motor control signal corresponding to the mode to terminals U+, U-, V+, V-, W+, and W- respectively connected to the switching elements 16 to 21. When the switching elements 16 to 21 are each an FET, the terminals U+, U-, V+, V-, W+, and W- are each connected to the gate of the corresponding switching element. By PWM controlling the motor control signal, the control circuit 14 controls the current supplied to the motor coils 3u, 3v, and 3w and controls the rotation speed of the motor 3. Here, a mode is selected from modes A to F in correspondence with a sensor signal output from the hall element S forming a rotor position detection sensor.

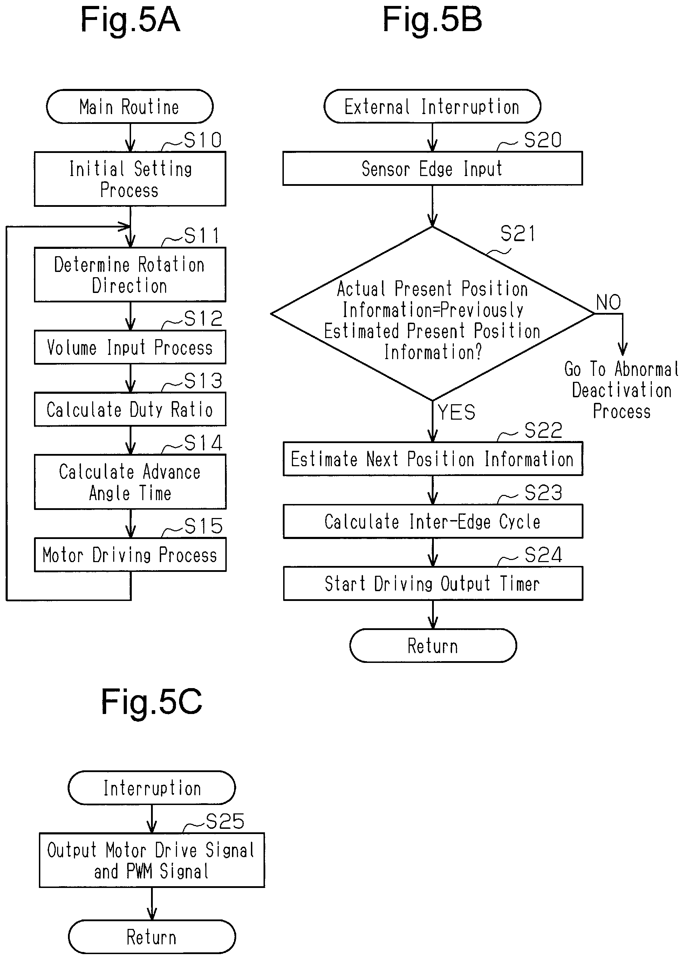

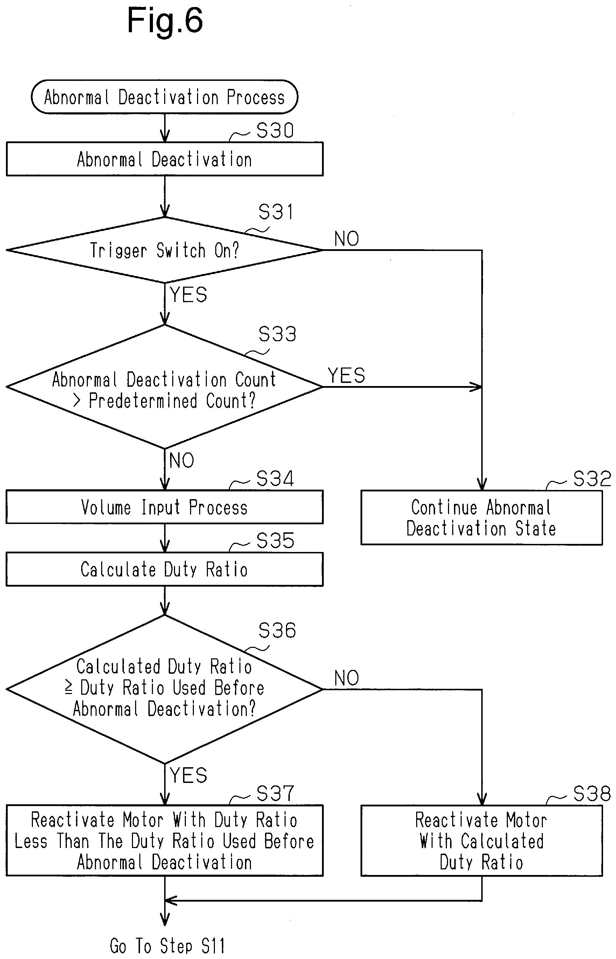

The operation of the electric power tool 1 of the embodiment will now be described with reference to Figs. 5 and 6.

As shown in Fig. 5A, as a main routine to control the driving of the motor, the control circuit 14 first performs an initial setting process (step S10). The control circuit 14 reads a signal of the rotation direction selector 11 and determines the rotation direction of the motor 3 (step S11). The control circuit 14 performs a volume input process that processes a speed signal received from the trigger switch 10 in accordance with a predetermined algorithm (step S12), and calculates the duty ratio in correspondence with the input speed signal (step S13). The control circuit 14 calculates the timing for advancing an angle based on the rotation speed in the motor 3 (step S14), and then performs the driving process on the motor 3 (step S15). Subsequently, steps S11 to S15 are repeated.

Here, in the volume input process of step S12, the control circuit 14 converts the input speed signal into a volume signal corresponding to the pulled amount of the trigger switch 10 and stores the volume signal. In the calculation of the timing for advancing the angle, when an advance angle is represented by, for example, α°, the timing of an external interruption, that is, the timing for inputting the sensor signal, is 60° in terms of electrical angle. Thus, the control circuit 14 outputs a timer interruption signal after a delay of a time corresponding to (60-α)° from when an external interruption is received. In this manner, the control circuit 14 may perform an advance angle control of the advance angle α°. The timing for advancing the angle tn is calculated by the equation of tn=(T-2*(60-α))/60.

An interruption process of Fig. 5B will now be described. The interruption process is triggered by an edge of the sensor signal output from the hall element S, which detects the rotor position of the motor 3.

When receiving an edge of the sensor signal from the hall element S (step S20), the control circuit 14 compares previously estimated present position information (refer to step S22 described later) with the present position information that is based on the latest sensor signal (step S21). If the previously estimated present position information conforms to the present position information based on the latest sensor signal (step S21: YES), the control circuit 14 determines that the operation is normal. Thus, the control circuit 14 estimates and holds the next position information using the present position information based on the latest sensor signal (step S22). Then, the control circuit 14 calculates an inter-edge cycle (interval between sensor signals) using a count value of the edge of the input sensor signal in the previous step S20 and a count value of the edge of the input sensor signal in the present step S20 (step S23). The control circuit 14 starts a driving output timer (step S24) and returns to the main routine.

The control circuit 14 deactivates the driving output timer when the advance angle time calculated in step S13 of the main routine elapses, and starts an interruption process of Fig. 5C. The control circuit 14 outputs a motor drive signal and a PWM signal (step S25). Then, the control circuit 14 returns to the main routine.

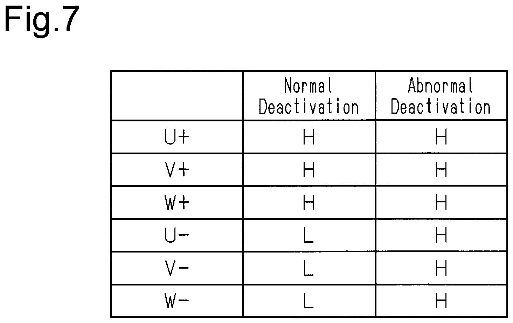

In step S21, if the previously estimated present position information differs from the present position information that is based on the latest sensor signal (step S21: NO), the control circuit 14 proceeds to an abnormal deactivation process such as that shown in Fig. 6. In the abnormal deactivation process, the control circuit 14 first executes abnormal deactivation in step S30. The abnormal deactivation may be referred to as a driving power supply suspension triggered by an abnormal detection. In an example shown in Fig. 7, during the abnormal deactivation, a motor control signal having the H level is provided to each of the terminals U+, U-, V+, V-, W+, and W-to stop the output from each of the switching elements 16 to 21. This suspends the power supply to the motor 3. In a normal deactivation, the switching elements corresponding to the terminals U+, V+, and W+ are switched off but the switching elements corresponding to the terminals U-, V-, and W- are each switched on. The control circuit 14 may count abnormal deactivations and store the abnormal deactivation count. The stored count value may be reset through predetermined procedures.

After the abnormal deactivation, the control circuit 14 determines whether or not the trigger switch 10 has been activated (pulled) (step S31). If the trigger switch 10 is deactivated (step S31: NO), the control circuit 14 continues the abnormal deactivation state (step S32).

If the trigger switch 10 has been activated (step S31: YES), the control circuit 14 determines whether or not the abnormal deactivation count exceeds a predetermined count (for example, ten) (step S33). If the abnormal deactivation count exceeds the predetermined count (step S33: YES), the control circuit 14 continues the abnormal deactivation state.

If the abnormal deactivation count is less than or equal to the predetermined count (step S33: NO), the control circuit 14 performs the volume input process that processes a speed signal of the trigger switch 10 in accordance with the predetermined algorithm (step S34). The control circuit 14 calculates the duty ratio in correspondence with the input speed signal (step S35).

Subsequently, the control circuit 14 compares the duty ratio calculated in step S35 with the duty ratio used before the abnormal deactivation (step S36). If the duty ratio calculated in step S35 is greater than or equal to the duty ratio used before the abnormal deactivation (step S36: YES), the control circuit 14 changes the calculated duty ratio to a duty ratio lower than the duty ratio used before the abnormal deactivation and reactivates the motor 3 (step S37). If the duty ratio calculated in step S35 is lower than the duty ratio used before the abnormal deactivation (step S36: NO), the control circuit 14 reactivates the motor 3 with the calculated duty ratio (that is, duty ratio lower than the duty ratio used before the abnormal deactivation) (step S38). Under this condition, the speed in the motor 3 is low due to the abnormal deactivation. Thus, if the motor 3 were to be activated with the same duty ratio as that used before the abnormal deactivation, a current overshoot may suddenly rotate the bit and apply an unexpected repercussion to the user. To cope with this problem, after the abnormal deactivation, the motor 3 is reactivated with a duty ratio that is lower than the duty ratio used before the abnormal deactivation. This prevents or reduces current overshoot and unexpected repercussions, and improves safety of the electric power tool 1.

Preferably, during the reactivation in step S37 or S38, the control circuit 14 may not perform the advance angle control. After activating the motor 3 in step S37 or S38, the control circuit 14 returns to step S11 of the main routine shown in Fig. 5A.

The advantages of the present embodiment will now be described.
(1) After the control circuit 14 executes abnormal deactivation (step S30), when activation of the motor 3 is selected with the trigger switch 10, which serves as the operation condition selector, the control circuit 14 controls the switching elements 16 to 21 of the drive circuit 15 with the duty ratio lower than the duty ratio used before executing the abnormal deactivation to reactivate the motor 3. Under this condition, the speed in the motor 3 is low due to the abnormal deactivation. If the motor 3 were activated with the same duty ratio as that used before the abnormal deactivation, current overshoot may suddenly rotate the bit and apply an unexpected repercussion to the user. To cope with this problem, after the abnormal deactivation, the motor 3 is reactivated with the duty ratio that is lower than the duty ratio used before the abnormal deactivation (refer to steps S37 and S38). This prevents or reduces current overshoot and unexpected repercussions, and improves safety of the electric power tool 1.
(2) In a preferred example, the control circuit 14 limits the reactivation count to the predetermined count. This reduces breakage of the switching elements 16 to 21 resulting from overuse when reactivations of the motor 3 and abnormal detections are repeated.
(3) In a preferred example, the control circuit 14 performs the commutation control on the motor 3 prior to reactivation and does not perform the advance angle control when starting the reactivation. When the reactivation is started, particularly, when the reactivation is started immediately after abnormal deactivation, rotation of the motor 3 is unstable. Thus, the advance angle control is suspended during the unstable rotation. This quickly stabilizes the rotation condition of the motor 3.

The above embodiment may be modified as follows.

The above embodiment is configured to limit the reactivation count to the predetermined count. However, there is no limit to such a configuration.

The above embodiment is configured not to perform the advance angle control on the motor 3 when starting reactivation. However, there is no limit to such a configuration.

Although not described in the above embodiment, the control circuit 14 may notify a user that the number of reactivations of the motor 3 has reached the predetermined number of times. This configuration allows the user to be aware of an abnormal state. There is no special limitation for the notification method, however, for example, a notification may be performed through a visual, audial, or tactile notification unit that may be arranged in the electric power tool 1.

The preferred example and modified examples may be appropriately combined.

### DESCRIPTION OF REFERENCE SYMBOLS

- 1: Electric power tool
- 3: Motor
- 10: Trigger Switch Serving As Operation Condition Selector
- 11: Rotation Direction Selector
- 14: Control Circuit Serving As Controller
- 15: Drive Circuit
- 16 to 21: Switching Elements
- S: Hall Element Serving As Sensor

## Claims

1. An electric power tool (1) including:
a brushless motor (3) capable of generating forward and reverse rotation;
a sensor (S) configured to detect a rotation position of the brushless motor (3) and output a position signal;
a drive circuit (15) that includes a plurality of switching elements (16 to 21) to supply power to the brushless motor (3);
an operation condition selector (10) configured to select one of activation and deactivation of the brushless motor (3) in accordance with an operation performed by a user;
a rotation direction selector (11) configured to select a rotation direction of the brushless motor (3) in accordance with an operation performed by the user; and
a controller (14) configured to control the drive circuit (15) in accordance with rotation position information of the brushless motor (3) based on the position signal provided from the sensor (S),
wherein the controller (14) is configured to estimate a present position signal from a present rotation direction of the brushless motor (3) selected by the rotation direction selector (11) and a position signal obtained prior to a change to a present position signal detected by the sensor (S),
wherein the controller (14) is configured to compare the estimated present position signal with the present position signal detected by the sensor (S) to determine whether or not present position information, which is based on the detected present position signal, is normal, and
the controller (14) is configured to execute abnormal deactivation (S30) to stop the supply of power to the brushless motor (3) from the drive circuit (15), when the controller (14) determines that the present position information based on the detected present position signal is abnormal, and
wherein the electric power tool (1) **being characterized in that:**
the controller (14) is configured to reactivate (S37), after the abnormal deactivation is executed and during a period in which a rotation speed of the brushless motor (3) is decreasing due to the abnormal deactivation, when activation of the brushless motor (3) is selected with the operation condition selector (10), the brushless motor (3) by controlling the switching elements (16 to 21) of the drive circuit (15) with a duty ratio lower than that before execution of the abnormal deactivation.

2. The electric power tool (1) according to claim 1, wherein the controller (14) is configured to limit a count of the reactivation to a predetermined count.

3. The electric power tool (1) according to claim 2, **characterized in that** the controller (14) is configured to notify the user that the reactivation has reached the predetermined count.

4. The electric power tool (1) according to any one of claims 1 to 3, **characterized in that** the controller (14) is configured to perform an advance angle control on the brushless motor (3) prior to the reactivation and not to perform the advance angle control when starting the reactivation.

## Patentansprüche

1. Elektrowerkzeug (1), aufweisend:
einen bürstenlosen Motor (3), der in der Lage ist, eine Vorwärts- und Rückwärtsdrehung zu erzeugen;
einen Sensor (S), der konfiguriert ist, um eine Drehposition des bürstenlosen Motors (3) zu erfassen und ein Positionssignal auszugeben;
eine Ansteuerschaltung (15), die mehrere Schaltelemente (16 bis 21) enthält, um den bürstenlosen Motor (3) mit Strom zu versorgen;
einen Betriebszustandswähler (10), der konfiguriert ist, um in Übereinstimmung mit einer von einem Benutzer durchgeführten Operation entweder eine Aktivierung oder eine Deaktivierung des bürstenlosen Motors (3) auszuwählen;
einen Drehrichtungswähler (11), der konfiguriert ist, um in Übereinstimmung mit einer durch den Benutzer durchgeführten Operation eine Drehrichtung des bürstenlosen Motors (3) auszuwählen; und
eine Steuereinheit (14), die konfiguriert ist, um die Ansteuerschaltung (15) in Übereinstimmung mit Drehpositionsinformationen des bürstenlosen Motors (3) zu steuern, die auf dem Positionssignal begründet sind, das von dem Sensor (S) zur Verfügung gestellt wird,
wobei die Steuereinheit (14) konfiguriert ist, um ein aktuelles Positionssignal auf der Grundlage einer aktuellen Drehrichtung des bürstenlosen Motors (3), die durch den Drehrichtungsselektor (11) ausgewählt wird, und eines Positionssignals abzuschätzen, das vor einer Änderung eines durch den Sensor (S) erfassten aktuellen Positionssignals erhalten ist,
wobei die Steuereinheit (14) konfiguriert ist, um das geschätzte aktuelle Positionssignal mit dem von dem Sensor (S) erfassten aktuellen Positionssignal zu vergleichen, um festzustellen, ob aktuelle Positionsinformationen, die auf dem erfassten aktuellen Positionssignal begründet sind, normal sind oder nicht, und
die Steuereinheit (14) konfiguriert ist, um eine anormale Deaktivierung (S30) auszuführen, um die Stromzufuhr von der Ansteuerschaltung (15) zu dem bürstenlosen Motor (3) zu unterbrechen, wenn die Steuereinheit (14) feststellt, dass die aktuellen Positionsinformationen, die auf dem erfassten aktuellen Positionssignal begründet sind, anormal sind, und
wobei das elektrische Elektrowerkzeug (1) **dadurch gekennzeichnet ist, dass**:
die Steuereinheit (14) konfiguriert ist, um nach der Ausführung der anormalen Deaktivierung und während eines Zeitraums, in dem eine Drehzahl des bürstenlosen Motors (3) aufgrund der anormalen Deaktivierung abnimmt, wenn die Aktivierung des bürstenlosen Motors (3) mittels des Betriebszustandswählers (10) ausgewählt ist, den bürstenlosen Motor (3) zu reaktivieren (S37), indem die Schaltelemente (16 bis 21) der Ansteuerschaltung (15) mit einem Tastverhältnis angesteuert werden, das niedriger ist als dasjenige vor der Ausführung der anormalen Deaktivierung.

2. Elektrowerkzeug (1) nach Anspruch 1, wobei die Steuereinheit (14) konfiguriert ist, um einen Zählwert der Reaktivierung auf einen vorbestimmten Zählwert zu begrenzen.

3. Elektrowerkzeug (1) nach Anspruch 2, **dadurch gekennzeichnet, dass** die Steuereinheit (14) konfiguriert ist, um den Benutzer zu benachrichtigen, dass die Reaktivierung den vorbestimmten Zählwert erreicht hat.

4. Elektrowerkzeug (1) nach einem der Ansprüche 1 bis 3, **dadurch gekennzeichnet, dass** die Steuereinheit (14) konfiguriert ist, um vor der Reaktivierung eine Vorschubwinkelsteuerung des bürstenlosen Motors (3) durchzuführen und die Vorschubwinkelsteuerung bei einem Start der Reaktivierung nicht durchzuführen.

## Revendications

1. Outil électrique (1) incluant :
un moteur sans balai (3) apte à produire une rotation vers l'avant et une rotation vers l'arrière ;
un capteur (S) configuré de manière à détecter une position de rotation du moteur sans balai (3) et à fournir en sortie un signal de position ;
un circuit d'attaque (15) qui inclut une pluralité d'éléments de commutation (16 à 21) pour alimenter électriquement le moteur sans balai (3) ;
un sélecteur de condition de fonctionnement (10) configuré de manière à sélectionner l'une parmi une activation et une désactivation du moteur sans balai (3) conformément à une opération mise en oeuvre par un utilisateur ;
un sélecteur de sens de rotation (11) configuré de manière à sélectionner un sens de rotation du moteur sans balai (3) conformément à une opération mise en œuvre par l'utilisateur ; et
un contrôleur (14) configuré de manière à commander le circuit d'attaque (15) conformément à des informations de position de rotation du moteur sans balai (3) sur la base du signal de position fourni à partir du capteur (S) ;
dans lequel le contrôleur (14) est configuré de manière à estimer un signal de position en cours à partir d'un sens de rotation en cours du moteur sans balai (3), sélectionné par le sélecteur de sens de rotation (11), et un signal de position obtenu avant une modification du signal de position en cours détecté par le capteur (S) ;
dans lequel le contrôleur (14) est configuré de manière à comparer le signal de position en cours estimé au signal de position en cours détecté par le capteur (S), en vue de déterminer si des informations de position en cours, qui sont basées sur le signal de position en cours détecté, sont normales ou non ; et
dans lequel le contrôleur (14) est configuré de manière à exécuter une désactivation anormale (S30) en vue d'interrompre l'alimentation électrique du moteur sans balai (3) à partir du circuit d'attaque (15), lorsque le contrôleur (14) détermine que les informations de position en cours basées sur le signal de position en cours détecté sont anormales ; et
dans lequel l'outil électrique (1) est **caractérisé en ce que** :
le contrôleur (14) est configuré de manière à réactiver (S37), après l'exécution de la désactivation anormale et pendant une période au cours de laquelle une vitesse de rotation du moteur sans balai (3) diminue sous l'effet de la désactivation anormale, lorsque l'activation du moteur sans balai (3) est sélectionnée au moyen du sélecteur de condition de fonctionnement (10), le moteur sans balai (3), en commandant les éléments de commutation (16 à 21) du circuit d'attaque (15) avec un cycle de service inférieur à celui avant l'exécution de la désactivation anormale.

2. Outil électrique (1) selon la revendication 1, dans lequel le contrôleur (14) est configuré de manière à limiter un comptage de la réactivation à un comptage prédéterminé.

3. Outil électrique (1) selon la revendication 2, **caractérisé en ce que** le contrôleur (14) est configuré de manière à notifier, à l'utilisateur, que la réactivation a atteint le comptage prédéterminé.

4. Outil électrique (1) selon l'une quelconque des revendications 1 à 3, **caractérisé en ce que** le contrôleur (14) est configuré de manière à mettre en œuvre une commande d'angle d'avance sur le moteur sans balai (3) avant la réactivation, et à ne pas mettre en œuvre la commande d'angle d'avance lors de l'initiation de la réactivation.
